# FASCICULE DE BREVET EUROPEEN

(11) **EP 3 815 523 B1**
(45) Date de publication et mention de la délivrance du brevet: **01.05.2024**
(21) Numéro de dépôt: 20203414.6
(22) Date de dépôt: 22.10.2020
(51) Int. Cl.: A01K 7/00, A01K 7/02

(54) **ABREUVOIR POUR ANIMAUX**
TIERTRÄNKE
DRINKING TROUGH FOR ANIMALS

(30) Priorité: 29.10.2019 FR 1912094
(43) Date de publication de la demande: 05.05.2021
(73) Titulaire: La Buvette, 08013 Charleville Mézières Cedex (FR)
(72) Inventeur: BOUSQUET, Jean Philippe, 51480 BELVAL SOUS CHATILLON (FR)
(74) Mandataire: Rhein, Alain

(56) Documents cités:
- GB-A- 2 453 651
- US-A- 2 430 272
- US-A- 3 745 977
- US-A- 4 286 546
- US-A1- 2007 199 512

## Description

La présente invention concerne un abreuvoir pour animaux notamment d'élevage, comportant un bac apte à contenir de l'eau comportant en partie supérieure une ouverture refermée par des moyens d'obturation escamotables aptes à être repoussés en position d'ouverture par un animal.

La présente invention concerne le domaine des dispositifs d'abreuvement pour animaux notamment d'élevage et a trait, plus particulièrement, aux abreuvoirs d'extérieurs soumis aux intempéries.

On connaît d'ores et déjà de nombreux abreuvoirs pour animaux prévus pour être implantés dans des parcs ou des enclos d'extérieurs et auxquels peuvent accéder librement les animaux pour se désaltérer.

Parmi ces abreuvoirs certains sont plus particulièrement destinés à résister aux intempéries et notamment aux températures hivernales.

De tels abreuvoirs présentent des parois périphériques dont la particularité consiste en ce qu'elles procurent une isolation thermique du contenu. A titre d'exemple, sur la périphérie externe du bac peut être appliquée un revêtement isolant. Il est plus fréquent de concevoir cette paroi périphérique du bac sous forme d'une double peau, c'est-à-dire comportant une paroi interne et une paroi externe emprisonnant une lame d'air enveloppante, voire entretoisées d'un matériau isolant tel qu'une mousse expansée.

Ainsi, il est courant de fabriquer de tels bacs d'abreuvoirs par rotomoulage.

Ce bac comporte un orifice fermé par l'intermédiaire de moyens d'obturation de type escamotables de telle façon qu'ils puissent être repoussés par le museau d'un animal, lui donnant accès à l'eau contenue dans le bac.

Le plus souvent cet orifice est pratiqué dans un couvercle refermant une ouverture que comporte le bac dans sa partie supérieure et permettant d'accéder à l'intérieur du bac, notamment pour les opérations de nettoyage. Tout comme les parois du bac, le couvercle est préférentiellement défini en un matériau apte à isoler thermiquement le contenu.

Il est plus particulièrement connu de concevoir les moyens d'obturation escamotables de l'orifice sous forme d'un flotteur qui peut être repoussé par l'animal dans le bac en faisant déborder l'eau à laquelle il souhaite accéder.

Ce flotteur est là encore conçu en un matériau isolant. Il est naturellement repoussé verticalement par l'eau contenue dans le bac pour refermer l'orifice dans le couvercle après retrait de la pression exercée par l'animal.

Cela suppose, toutefois, qu'il persiste dans le bac une quantité d'eau suffisante pour assurer cette poussée verticale sur le flotteur d'où résulte la fermeture de cet orifice. Aussi, ce type d'abreuvoir est nécessairement raccordé à une alimentation en eau. Celle-ci s'effectue généralement de manière automatique par la commande d'ouverture d'un robinet lorsque le niveau d'eau dans le bac tend à descendre en dessous d'un niveau seuil.

En somme, sans cette alimentation automatique en eau cet orifice que comporte l'abreuvoir ne peut être maintenu refermé et l'air froid extérieur peut pénétrer dans le bac et provoquer le gel de l'eau qu'elle contient en période hivernale.

Bien évidemment, les moyens d'obturation peuvent prendre d'autres formes de réalisation que celle d'un flotteur, par exemple la forme d'un volet à rappel élastique de fermeture que peut repousser l'animal dans le bac pour accéder à l'eau.

Cependant, sans alimentation systématique en eau, plus le niveau dans le bac baisse, plus l'animal est dans l'obligation d'engager son museau au travers de l'orifice jusqu'à ne plus pouvoir accéder à l'eau et en prenant le risque de se coincer.

Il convient de remarquer que le risque de gel de l'eau contenue dans un abreuvoir n'est pas la seule raison pour laquelle il est souhaitable de le maintenir fermé et qu'il ne s'ouvre que lorsqu'un animal vient s'abreuver. On peut ainsi éviter que l'eau ne soit souillée par des saletés transportées par le vent ou encore, que des petits animaux, tels que les rongeurs, ne se noient dans le bac.

Un abreuvoir selon le préambule de la revendication 1, comprenant un moyen d'obturation et destiné à alimenter un animal lorsqu'il est transporté dans un véhicule est par exemple connu du document US 2007/0199512 A1. Le moyen d'obturation permet d'éviter des débordements provoqués par des mouvements brusques du véhicule. D'autres abreuvoirs selon le préambule de la revendication 1 sont connus des documents US 3,745,977 A, US 2,430,272 A, GB 2 453 651 A et US 4,286,546 A.

Dans le cadre d'une démarche inventive on a imaginé refermer l'ouverture du bac dans sa partie supérieure au travers d'un couvercle qui puisse s'enfoncer dans ce bac à fur et à mesure que le niveau d'eau baisse et qui, par grand froid, ne risque pas d'être bloqué en périphérie par de l'eau susceptible de geler.

C'est, en effet, au travers de l'interstice périphérique entre le couvercle et le bac que l'air froid peut pénétrer dans ce dernier et qui, en figeant l'eau au niveau de cet interstice conduit à bloquer le couvercle dans le bac.

L'invention apporte avantageusement une solution à ce problème.

Ainsi, l'invention concerne un abreuvoir pour animaux, notamment d'élevage, comportant un bac apte à contenir de l'eau et présentant en partie supérieure une ouverture refermée par des moyens d'obturation escamotables aptes à être repoussés par un animal pour accéder à l'eau contenue dans le bac, caractérisé par le fait que les moyens d'obturation escamotables comprennent un couvercle défini de section ajustée à l'ouverture dans le bac pour s'insérer de manière mobile dans ce dernier, ce couvercle étant conçu, à la manière d'un flotteur, en un matériau apte à surnager au-dessus du niveau d'eau dans le bac, ce couvercle comprenant encore une ligne de flottaison définissant l'interface entre la partie immergée de ce couvercle et sa partie émergée lorsqu'il vient reposer sur l'eau que contient le bac, caractérisé par le fait que le couvercle comporte un rebord périphérique comprenant une face inférieure, orientée vers le fond du bac, s'étendant dans un plan horizontal situé au-dessus de la ligne de flottaison de ce couvercle..

Les avantages découlant de la présente invention consistent en ce qu'en étant en mesure de suivre le niveau d'eau contenue dans le bac de l'abreuvoir, même par grand froid, l'animal peut systématiquement accéder à cette eau, par exemple en repoussant le couvercle pour faire déborder l'eau en périphérie, quel que soit ce niveau d'eau.

De manière avantageuse, dans le couvercle peut encore être ménagé un orifice, lui-même refermé par les moyens d'obturation escamotables auxiliaires.

Ces derniers peuvent à leur tour être conçus sous forme d'un flotteur. De cette manière, celui-ci peut être continuellement repoussé en position de fermeture de cet orifice dans le couvercle, quel que soit le niveau d'eau dans le bac, dans la mesure où ce couvercle repose systématiquement sur cette eau.

D'autres buts et avantages de la présente invention apparaîtront au cours de la description qui va suivre se rapportant à un exemple de réalisation.

La compréhension de cette description sera facilitée en se référant au dessin ci-joint dans lequel :

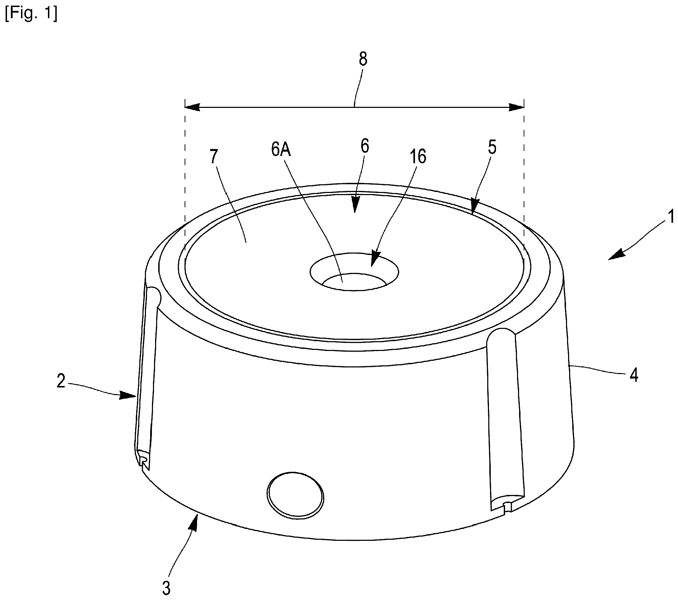

La figure 1 est une représentation schématisée et en perspective d'un abreuvoir selon l'invention ;
La figure 2 est une représentation schématisée et en coupe de cet abreuvoir ;
La figure 3 est une illustration schématisée des moyens d'anti-basculement du couvercle dans le bac de l'abreuvoir.

Telle que représentée dans des figures du dessin ci-joint, la présente invention a trait à un abreuvoir 1 comprenant un bac 2 comportant un fond 3 et une paroi périphérique 4 ceinturant ce bac 2.

De manière préférentielle, mais non nécessairement, le fond 3 et la paroi périphérique 4 du bac 2 peuvent être conçus en un matériau apte à procurer une certaine isolation thermique et protéger ainsi l'eau contenue dans le bac 2 contre le gel.

À titre d'exemple, le bac 2 peut être conçu par rotomoulage de manière à conférer à ce fond 3 et à la paroi périphérique 4 une double peau emprisonnant une lame d'air d'isolation ou tout autre matériau isolant.

Il convient d'observer que la présente invention n'est nullement limitée à tel mode de réalisation et qu'elle trouvera également son application à un abreuvoir comportant un bac non thermiquement isolé.

En partie supérieure, ce bac 2 comporte une ouverture 5 refermée par des moyens d'obturation escamotables 6 en mesure d'être repoussés par le museau d'un animal pour accéder à l'eau contenue dans le bac 2.

Les moyens d'obturation escamotables 6 comprennent un couvercle 7 défini de section 8 ajustée à l'ouverture 5 dans le bac 2 pour s'insérer de manière mobile dans ce dernier.

Plus particulièrement, cette section 8 du couvercle 7 est définie afin que ce dernier puisse se déplacer sensiblement verticalement dans le bac 2 en se maintenant dans un plan sensiblement horizontal.

En somme, cette section 8 de ce couvercle 7 est telle qu'il puisse monter et descendre dans le bac 2 en fonction du niveau d'eau que contient ce dernier.

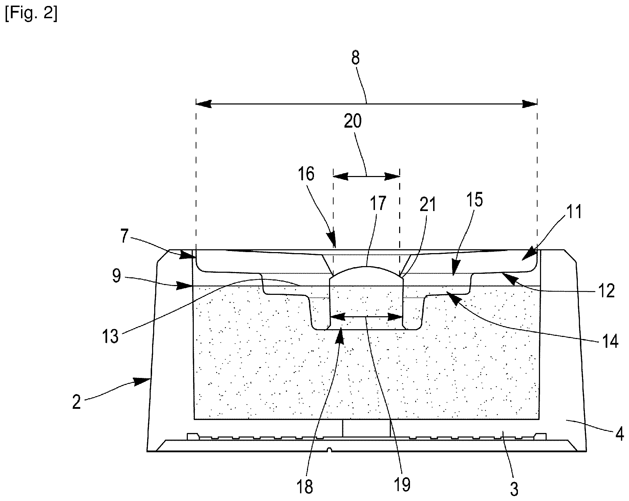

Si ce couvercle 7 peut être monté de manière coulissante verticalement dans le bac 2, il est préférentiellement conçu à la manière d'un flotteur, en un matériau apte à surnager au-dessus du niveau d'eau 9 dans ce bac 2, tel que schématiquement illustré dans la figure 2.

Pour rendre possible cette mobilité du couvercle 7 dans le bac 2, celui-ci comporte préférentiellement une section interne 10, mesurée dans un plan horizontal, sensiblement constante sur une grande partie de sa hauteur, depuis son ouverture 5 en partie supérieure en direction du fond 3. On entendra par sensiblement constant, des parois en légère dépouille, de l'ordre de 2 à 3°, favorisant notamment le démoulage d'un bac 2 conçu par moulage.

Selon l'invention, le couvercle 7 comporte un rebord périphérique 11 comprenant une face inférieure 12, orientée vers le fond 3 du bac 2, s'étendant dans un plan sensiblement horizontal situé au-dessus de la ligne de flottaison 13 de ce couvercle 7.

Du fait de son poids, le couvercle 7, en venant reposer sur l'eau que contient le bac 2, s'enfonce en partie dans cette eau. La ligne de flottaison 13 est l'interface entre la partie immergée 14 de ce couvercle 7 et sa partie émergée 15.

Au travers d'une telle configuration et de l'air persistante sous la face inférieure 12 du rebord périphérique 11 du couvercle 7 par rapport à la surface de l'eau contenue dans le bac 2, il est évité que l'eau en périphérie, davantage exposée au risque d'infiltration d'air extérieur froid, ne gèle et bloque le couvercle 7 en périphérie contre la paroi interne du bac 2.

Dans le cadre du mode de réalisation qui vient d'être décrit, l'animal en repoussant dans le bac 2, le couvercle 7, fait déborder l'eau en périphérie de ce dernier ce qui lui permet de s'abreuver.

Toutefois ce couvercle 7 peut être de grande taille, ce qui risque de rendre l'accès à l'eau pus difficile.

Ainsi, selon un mode de réalisation avantageux, dans le couvercle 7 peut être réalisé au moins un orifice 16 refermé par des moyens d'obturation escamotables auxiliaires 6A.

Ceux-ci sont, là encore, avantageusement définis par un flotteur 17 monté mobile verticalement sous cet orifice 16.

Plus particulièrement, sous le couvercle 7, au droit de l'orifice 16, s'étend un logement tubulaire 18 à la section interne 19 duquel est ajusté celle du flotteur 17 de manière à permettre à ce dernier de se mouvoir librement et verticalement dans ce logement tubulaire 18.

Avantageusement, le flotteur 17 est de section plus importante à celle 20 de l'orifice 16 de manière à ne pas émerger du couvercle 7. Dans le mode de réalisation illustré cela se traduit, en partie supérieure du logement tubulaire 18, sensiblement à hauteur de l'embouchure de l'orifice 16, par un épaulement 21.

Préférentiellement, le logement tubulaire 18 comporte au niveau de ses parois de guidage du flotteur 17 une ou plusieurs ouvertures, sous forme de trou ou de fente, comme illustré sur les figures, destinées à favoriser le passage de l'eau au-dessous du flotteur 17 lorsque celui-ci est repoussé dans le bac 2. L'animal accède ainsi plus facilement à cette eau.

Dans la mesure où le couvercle 7, défini à la manière d'un flotteur, surnage sur l'eau contenue dans le bac 2 et peut se mouvoir librement dans ce dernier en fonction du niveau d'eau, il est susceptible de basculer sous l'action d'une pression exercée par un animal cherchant à s'abreuver.

Aussi, de manière avantageuse, le couvercle 7 comporte des moyens d'anti-basculement 22 définis pour limiter sa rotation autour d'un axe dans le plan de ce couvercle 7.

Substantiellement, ces moyens d'anti-basculement 22 peuvent être définis par une épaisseur du couvercle 7 telle que, repoussés dans une position inclinée sa section devient plus importante que celle 8 de l'ouverture 5 évitant, de fait, qu'il ne se retourne.

Ces moyens d'anti-basculement 22 peuvent encore être définis par une jupe s'étendant en périphérie sous le couvercle 7, jupe, lui conférant cette épaisseur suffisante pour limiter l'amplitude de son basculement dans l'ouverture 5 du bac 2.

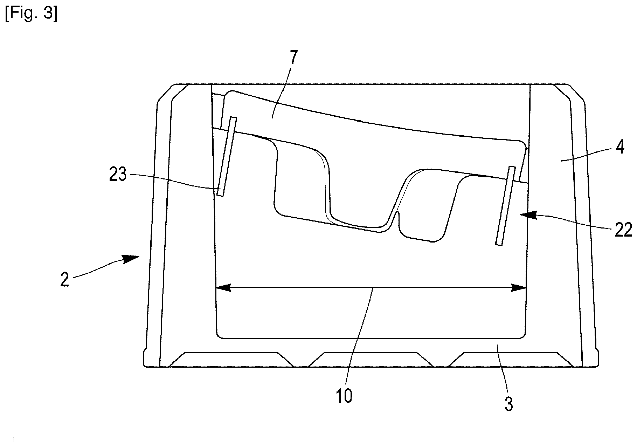

Dans le mode de réalisation illustré dans la figure 3, ces moyens d'anti-basculement 22 sont définis sous forme de tiges 23 s'étendant sensiblement verticalement sous le rebord périphérique 11 du couvercle 7 pour produire le même effet que les solutions décrites précédemment.

Avantageusement, ces tiges 23 sont au nombre minimum de 3 préférentiellement réparties régulièrement sous ce rebord périphérique 11 du couvercle 7.

Les avantages découlant de la présente invention consistent en ce qu'il est possible de maintenir refermé un abreuvoir pour éviter les risques de gel de l'eau contenue et/ou l'entrée de salissures voire de petits animaux susceptibles de s'y noyer, sans que pour autant le maintien refermé de cet abreuvoir ne dépende d'une alimentation automatique en eau.

Surtout cette solution sur l'invention s'avère techniquement simple tout en répondant efficacement à l'ensemble des contraintes que peuvent subir ce type d'abreuvoir, que ce soit sous l'action d'un animal ou de son exposition aux intempéries.

## Revendications

1. Abreuvoir pour animaux, notamment d'élevage, comportant un bac (2) apte à contenir de l'eau et présentant en partie supérieure une ouverture (5) refermée par des moyens d'obturation escamotables (6) aptes à être repoussés par un animal pour accéder à l'eau contenue dans le bac (2), les moyens d'obturation escamotables (6) comprenant un couvercle (7) défini de section (8) ajustée à l'ouverture (5) dans le bac (2) pour s'insérer de manière mobile dans ce dernier, ce couvercle (7) étant conçu, à la manière d'un flotteur, en un matériau apte à surnager au-dessus du niveau d'eau (9) dans le bac (2), ce couvercle (7) comprenant encore une ligne de flottaison (13) définissant une interface entre la partie immergée (14) de ce couvercle (7) et sa partie émergée (15) lorsqu'il vient reposer sur l'eau que contient le bac (2), ledit abreuvoir étant **caractérisé par le fait que** le couvercle (7) comporte un rebord périphérique (11) comprenant une face inférieure (12), orientée vers le fond (3) du bac (2), s'étendant dans un plan horizontal situé au-dessus de la ligne de flottaison (13) de ce couvercle (7).

2. Abreuvoir selon la revendication 1 **caractérisé en ce que** le couvercle (7) est monté de manière coulissante verticalement dans le bac (2).

3. Abreuvoir selon l'une quelconque des revendications précédentes, **caractérisé en ce que** le bac (2) comporte une section interne (10), mesurée dans un plan horizontal, constante depuis son ouverture (5) en partie supérieure en direction de son fond (3).

4. Abreuvoir selon l'une quelconque des revendications précédentes, **caractérisé en ce que** le couvercle (7) comporte au moins un orifice (16) refermé par des moyens d'obturation escamotables auxiliaires (6A).

5. Abreuvoir selon la revendication 4, **caractérisé en ce que** les moyens d'obturation escamotables auxiliaires sont définis par un flotteur (17) monté mobile verticalement sous l'orifice (16).

6. Abreuvoir selon la revendication 5, **caractérisé en ce que** sous le couvercle (7), au droit de l'orifice (16), s'étend un logement tubulaire (18) à une section interne (19) duquel est ajusté la section du flotteur (17) pour permettre à ce dernier de se mouvoir librement et verticalement dans ce logement tubulaire (18).

7. Abreuvoir selon la revendication 5 ou 6, **caractérisé en ce que** le flotteur (17) est de section plus importante à celle (20) de l'orifice (16).

8. Abreuvoir selon l'une quelconque des revendications précédentes, **caractérisé en ce que** le couvercle (7) comporte des moyens d'anti-basculement (22) définis pour limiter sa rotation dans le bac (2) autour d'un axe passant dans le plan de ce couvercle (7).

## Patentansprüche

1. Tränke für Tiere, insbesondere Zuchttiere, umfassend einen Behälter (2), der geeignet ist, um Wasser zu enthalten, und in einem oberen Teil eine Öffnung (5) aufweist, die durch einziehbare Verschlussmittel (6) verschlossen ist, die geeignet ist, um durch ein Tier zurückgeschoben zu werden, um an das in dem Behälter (2) enthaltene Wasser zu gelangen, wobei die einziehbaren Verschlussmittel (6) einen Deckel (7) vorweisen, der mit einem Abschnitt (8) definiert ist, der an die Öffnung (5) in dem Behälter (2) angepasst ist, um sich auf bewegbare Art in diesen Letzteren einzufügen, wobei dieser Deckel (7) konzipiert ist, nach der Art eines Schwimmers, aus einem Material, das geeignet ist, über dem Wasserspiegel (9) in dem Behälter (2) an der Oberfläche zu schwimmen, wobei dieser Deckel (7) noch eine Wasserlinie (13) aufweist, die eine Grenzfläche zwischen dem eingetauchten Teil (14) dieses Deckels (7) und seinem aufgetauchten Teil (15) definiert, wenn er auf dem Wasser, das der Behälter (2) enthält, zu liegen kommt, wobei die Tränke **dadurch gekennzeichnet ist, dass** der Deckel (7) einen peripheren Rand (11) umfasst, der eine untere Fläche (12) aufweist, die zu dem Boden (3) des Behälters (2) gerichtet ist und sich in einer horizontalen Ebene oberhalb der Wasserlinie (13) dieses Deckels (7) erstreckt.

2. Tränke nach Anspruch 1, **dadurch gekennzeichnet, dass** der Deckel (7) auf verschiebbare Art vertikal in dem Behälter (2) angebracht ist.

3. Tränke nach einem der vorstehenden Ansprüche,
**dadurch gekennzeichnet, dass** der Behälter (2) einen Innenabschnitt (10), der in einer horizontalen Ebene gemessen wird, der von seiner Öffnung (5) in dem oberen Teil in Richtung seines Bodens (3) durchgängig ist, umfasst.

4. Tränke nach einem der vorstehenden Ansprüche,
**dadurch gekennzeichnet, dass** der Deckel (7) mindestens eine Öffnung (16), die durch einziehbare Hilfsverschlussmittel (6A) geschlossen wird, umfasst.

5. Tränke nach Anspruch 4, **dadurch gekennzeichnet, dass** die einziehbaren Hilfsverschlussmittel durch einen Schwimmer (17) definiert sind, der bewegbar vertikal unter der Öffnung (16) angebracht ist.

6. Tränke nach Anspruch 5, **dadurch gekennzeichnet, dass** sich unter dem Deckel (7) direkt unter der Öffnung (16) ein röhrenförmiges Gehäuse (18) erstreckt, an dessen Innenabschnitt (19) der Abschnitt des Schwimmers (17) angepasst ist, um diesem Letzteren zu ermöglichen, sich frei und vertikal in diesem röhrenförmigen Gehäuse (18) zu bewegen.

7. Tränke nach Anspruch 5 oder 6, **dadurch gekennzeichnet, dass** der Schwimmer (17) einen größeren Abschnitt als derjenige (20) der Öffnung (16) besitzt.

8. Tränke nach einem der vorstehenden Ansprüche,
**dadurch gekennzeichnet, dass** der Deckel (7) Kippschutzmittel (22) umfasst, die definiert sind, um seine Drehung in dem Behälter (2) um eine Achse zu begrenzen, die in der Ebene dieses Deckels (7) verläuft.

## Claims

1. Drinking trough for animals, in particular livestock, comprising a tank (2) capable of containing water and having, in the upper part, an opening (5) closed by retractable closing means (6) capable of being pushed back by an animal to access the water contained in the tank (2), the retractable closing means (6) comprising a cover (7) defined by a cross section (8) adjusted to the opening (5) in the tank (2) to be movably inserted in the latter, this cover (7) being designed, like a float, in a material capable of floating above the water level (9) in the tank (2), this cover (7) further comprising a waterline (13) defining an interface between the submerged part (14) of this cover (7) and its emerged part (15) when it rests on the water contained in the tank (2), said drinking trough being **characterized in that** the cover (7) has a peripheral rim (11) comprising a lower face (12) which faces the bottom (3) of the container (2) and extends in a horizontal plane located above the waterline (13) of this cover (7).

2. Drinking trough according to claim 1, **characterized in that** the cover (7) is vertically slidably mounted in the tank (2).

3. Drinking trough according to either of the preceding claims, **characterized in that** the tank (2) comprises an internal cross section (10), measured in a horizontal plane, which is constant from its opening (5) in the upper part towards its bottom (3).

4. Drinking trough according to any of the preceding claims,
**characterized in that** the cover (7) comprises at least one orifice (16) closed by auxiliary retractable closing means (6A).

5. Drinking trough according to claim 4, **characterized in that** the auxiliary retractable closing means are defined by a float (17) vertically movably mounted under the orifice (16).

6. Drinking trough according to claim 5, **characterized in that** under the cover (7), opposite the orifice (16), extends a tubular housing (18) having an internal cross section (19) from which the cross section of the float (17) is adjusted to allow the latter to move freely and vertically in this tubular housing (18).

7. Drinking trough according to claim 5 or 6, **characterized in that** the float (17) has a larger cross section than that (20) of the orifice (16).

8. Drinking trough according to any of the preceding claims,
**characterized in that** the cover (7) comprises anti-tilting means (22) defined to limit its rotation in the tank (2) about an axis passing through the plane of this cover (7).
